# EUROPEAN PATENT APPLICATION

(11) **EP 4 446 351 A1**
(43) Date of publication of application: **16.10.2024**
(21) Application number: 22904322.9
(22) Date of filing: 09.12.2022
(51) Int. Cl.: C08F 290/04, C08F 20/26

(54) **CURABLE COMPOSITION, MOLDED BODY, SILICONE HYDROGEL, METHOD FOR PRODUCING SILICONE HYDROGEL, AND MACROMONOMER**

(30) Priority: 10.12.2021 JP 2021201031
(71) Applicant: Mitsubishi Chemical Corporation, Tokyo 100-8251 (JP)
(72) Inventor: TSURUOKA Taiki, Tokyo 100-8251 (JP); TABATA Daiki, Tokyo 100-8251 (JP); FUKUTA Hiroki, Tokyo 100-8251 (JP); OTANI Go, Tokyo 100-8251 (JP)
(74) Representative: Hoffmann Eitle
(86) International application number: PCT/JP2022/045435
(87) International publication number: WO 2023/106395

(57) **Abstract**

A curable composition includes a macromonomer (A) having a structural unit (a1) represented by Formula (1), a silicone-based (meth)acrylate (B), and a hydrophilic monomer (C).

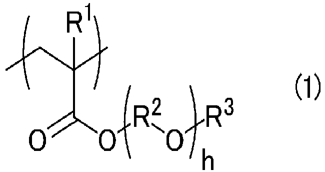

(In Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.)

## Description

### [Technical Field]

The present invention relates to a curable composition, a molded body, a silicone hydrogel, a method for producing a silicone hydrogel, and a macromonomer.

Priority is claimed on Japanese Patent Application No. 2021-201031 filed December 10, 2021, the content of which is incorporated herein.

### [Background Art]

Silicone hydrogels are used as a material for contact lenses, intraocular lenses, and the like due to having high oxygen permeability.

In general, soft contact lenses are manufactured by a cast molding method. Polypropylene molds are often used in this method, but, since polypropylene is hydrophobic, the silicone monomer polymerizes in a segregated state on the mold surface, which tends to reduce the hydrophilicity of the lens surface. When the lens surface is not sufficiently hydrophilic, there is a concern that lipids and proteins will easily attach thereto, leading to clouding of the lens and eye diseases.

Therefore, preparing a contact lens formed of silicone hydrogel, then coating the lens surface with plasma gas or a hydrophilic polymer, or forming a surface graft polymer using a hydrophilic monomer were proposed.

In addition, methods in which a hydrophilic monomer such as N,N-dimethylacrylamide (DMAA), N-vinyl-2-pyrrolidone (NVP), N-methyl-N-vinylacetamide (MVA), or N-vinylpyrrolidinone is added to a raw material monomer composition were proposed.

For example, Patent Document 1 describes a monomer composition for contact lenses that includes a phosphorylcholine group-containing (meth)acrylate, a silicon atom- and hydroxyl group-containing monomer, and a cross-linkable monomer.

In addition, Patent Document 2 proposes using a polymer material including a polymerizable compound such as 2-methoxyethyl acrylate to improve the water wettability, lubricity, and flexibility of the surfaces of ophthalmic lenses and contact lenses.

### [Citation List]

### [Patent Documents]

[Patent Document 1]
   Japanese Unexamined Patent Application, First Publication No. 2007-009060
[Patent Document 2]
   Japanese Unexamined Patent Application, First Publication No. 2011-219513

### [Summary of Invention]

### [Technical Problem]

However, surface treatments such as the coating described above require many apparatuses and involve complicated steps, which is not desirable for mass production.

In addition, although improvement is seen in the hydrophilicity of the lens surface with the technique described in Patent Document 1, the compatibility with silicone is not high, thus, transparency may decrease.

Furthermore, regarding the technique described in Patent Document 2, the hydrophilicity of the lens surface was not sufficient in some cases.

Therefore, the present invention has an object of proposing a curable composition capable of forming a molded body and silicone hydrogel having excellent surface hydrophilicity and transparency even when using a hydrophobic mold of polypropylene or the like.

### [Solution to Problem]

As a result of intensive research to solve the problems described above, the present inventors found that it was possible to solve the problems described above by the addition of a macromonomer (A) having a specific structural unit.

That is, the present invention has the following aspects.
[1] A curable composition comprising: a macromonomer (A) having a structural unit (a1) represented by Formula (1), a silicone-based (meth)acrylate (B), and a hydrophilic monomer (C). 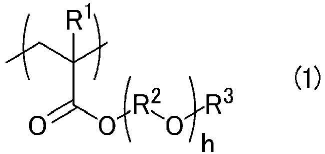 (In Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.)
[2] The curable composition according to [1], wherein a content of the macromonomer (A) is 1 to 50% by mass.
[3] The curable composition according to [1] or [2], wherein a ratio of the structural unit (a1) among all structural units of the macromonomer (A) is 40% by mass or more.
[4] The curable composition according to [1] or [2], wherein the ratio of the structural unit (a1) among all structural units of the macromonomer (A) is 70% by mass or more.
[5] The curable composition according to any of [1] to [4], wherein the macromonomer (A) has a number average molecular weight of 500 to 100,000.
[6] The curable composition according to any of [1] to [4], wherein the macromonomer (A) has a number average molecular weight of 1,000 to 5,000.
[7] The curable composition according to any of [1] to [6], wherein the structural unit (a1) is derived from a monomer (a'1), and the monomer (a'1) is at least one selected from the group consisting of methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, and methoxypolyethylene glycol methacrylate.
[8] The curable composition according to any of [1] to [7], wherein the macromonomer (A) has a terminal structure (a2) represented by Formula (2). 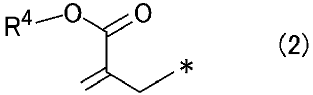 (In Formula (2), R⁴ represents a hydrogen atom or an alkyl group, an alkoxy group, an alkoxyalkyl group, an alicyclic group, an aryl group, a heteroaryl group, or a non-aromatic heterocyclic group that may have a substituent, and * represents a bond.)
[9] The curable composition according to any of [1] to [8, wherein the curable composition contains at least one of a compound (B1) represented by Formula (4) and a compound (B2) represented by Formula (5) as the silicone-based (meth)acrylate (B). 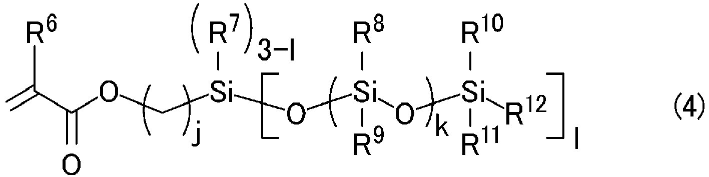 (In Formula (4), R⁶ represents a hydrogen atom or a methyl group. R⁷ to R¹² each independently represent an alkyl group, an alkoxy group, or an alkoxyalkyl group that may have a substituent. j is a natural number of 1 to 10, k is a natural number of 1 to 30, l is a natural number of 1 to 3. When l is 1, a plurality of R⁷ may be the same or different from each other, when l is 2 or more, a plurality of R⁸ to R¹² may be the same or different from each other. In addition, when k is 2 or more, a plurality of R⁸ and R⁹ may be the same or different from each other.) 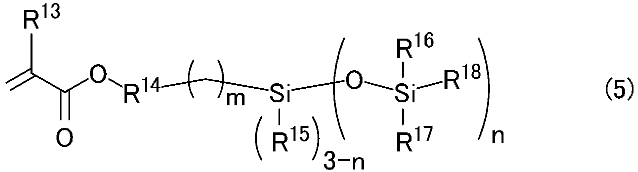 (In Formula (5), R¹³ represents a hydrogen atom or a methyl group. R¹⁴ represents a single bond or an alkylene group, an alkylene oxide group, a polyalkylene oxide group, or an alkylene-oxy-alkylene group that may have a substituent. R¹⁵ to R¹⁸ each independently represent an alkyl group, an alkoxy group, or an alkoxyalkyl group that may have a substituent. m is a natural number of 1 to 10 and n is a natural number of 1 to 3. When n is 1, a plurality of R¹⁵ may be the same or different from each other. When n is 2 or more, a plurality of R¹⁶ to R¹⁸ may be the same or different from each other.)
[10] A molded body comprising: the curable composition according to any of [1] to [9].
[11] A silicone hydrogel comprising: the curable composition according to any of [1] to [9].
[12] A method for producing a silicone hydrogel, the method comprising: a step of preparing the curable composition according to any of [1] to [9], a step of filling the curable composition into a mold and causing a polymerization reaction to obtain a molded body, and a step of hydrating the molded body to obtain a hydrogel.
[13] The method for producing a silicone hydrogel according to [12], wherein the mold has a hydrophobic surface.
[14] A macromonomer comprising: a structural unit (a1) represented by Formula (1) and a terminal structure (a2) represented by Formula (2). 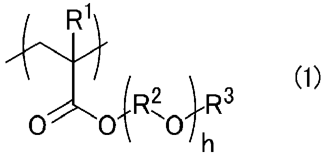 (In Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.) 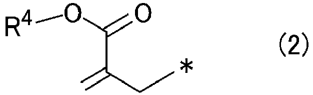 (In Formula (2), R⁴ is a hydrogen atom or an alkyl group, an alkoxy group, an alkoxyalkyl group, an alicyclic group, an aryl group, a heteroaryl group, or a non-aromatic heterocyclic group that may have a substituent, and * represents a bond).

### [Advantageous Effects of Invention]

According to the curable composition of the present invention, it is possible to form a molded body and silicone hydrogel having excellent surface hydrophilicity and transparency even when using a hydrophobic mold of polypropylene or the like.

### [Description of Embodiments]

A description will be given below of embodiments of the present invention. The following embodiments are merely examples for explaining the present invention and the present invention is not intended to be limited only to these embodiments. It is possible to implement the present invention in various ways without departing from the spirit thereof.

### <Curable Composition>

The curable composition of the present invention includes at least a macromonomer (A) having a specific structural unit (also simply referred to below as "macromonomer (A)"), a silicone-based (meth)acrylate (B), and a hydrophilic monomer (C).

A description will be given below of each component constituting the curable composition.

### 1. Macromonomer (A)

The "macromonomer" in the present invention is a polymeric monomer having a terminal polymerizable functional group and a high molecular weight skeleton component.

The number average molecular weight (Mn) of the macromonomer (A) is preferably 500 to 100,000, more preferably 700 to 20,000, even more preferably 1,000 to 5,000, and particularly preferably 2,000 to 4,000.

When the number average molecular weight of the macromonomer (A) is the above upper limit value or less, the macromonomer (A) is easily concentrated and segregated on the surfaces of the molded body and hydrogel, but large phase separation structures on the submicron to micron order are not easily generated inside the molded body and hydrogel, thus, it is considered that the transparency is unlikely to be impaired. In addition, when the number average molecular weight is the above lower limit value or more, there is a difference in molecular weight and reactivity with the hydrophilic monomer (C) and reaction-induced phase separation occurs, during which the macromonomer (A) is concentrated and segregated on the surface of the molded body and hydrogel, thus, it is considered that it is possible to increase the hydrophilicity of the molded body and the hydrogel surface.

The number average molecular weight of the macromonomer (A) is calculated as a relative molecular weight using polymethyl methacrylate as a reference resin by gel permeation chromatography (GPC).

The content of the macromonomer (A) in the curable composition of the present invention is preferably 1 to 50% by mass and more preferably 5 to 40% by mass. In the above range, the surface hydrophilicity and transparency of the molded body and hydrogel are good.

The macromonomer (A) of the present invention has a structural unit (a1) represented by Formula (1).

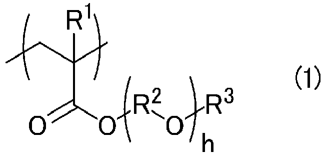

In Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.

Examples of the alkylene group for R² include branched or straight-chain alkylene groups having 1 to 4 carbon atoms, specifically, a methylene group, an ethylene group, an n-propylene group, an i-propylene group, an n-butylene group, a t-butylene group, an i-butylene group, and the like.

Among the above, from the viewpoint of the surface hydrophilicity and transparency of the molded body and hydrogel, R² is more preferably a methylene group, an ethylene group, an n-propylene group, or an n-butylene group and even more preferably a methylene group or an ethylene group.

Examples of the hydrocarbon group for R³ include branched or straight-chain alkyl groups having 1 to 6 carbon atoms, specifically, a methyl group, an ethyl group, an n-propyl group, an i-propyl group, an n-butyl group, a t-butyl group, an i-butyl group, a pentyl group (amyl group), an i-pentyl group, a hexyl group, and the like.

Among the above, from the viewpoint of the surface hydrophilicity and transparency of the molded body and hydrogel, R³ is more preferably a methyl group, an ethyl group, an n-propyl group, an i-propyl group, an n-butyl group, a t-butyl group or an i-butyl group, even more preferably a methyl group, an ethyl group, an n-propyl group, or an n-butyl group, and particularly preferably a methyl group or an ethyl group.

From the viewpoint of ease of availability, R¹ is preferably a hydrogen atom.

h is a natural number of 1 to 20, more preferably 1 to 10, even more preferably 1 to 8, and yet more preferably 1 to 5. When h is in the above range, the crystallinity does not easily become high, resulting in good handling properties.

The structural unit (a1) is preferably 40% by mass or more and 100% by mass or less of all structural units of the macromonomer (A), more preferably 70% by mass or more and 100% by mass or less, and even more preferably 90% by mass or more and 99% by mass or less. When the content of the structural unit (a1) is in the above range, it is possible to impart the effect of suppressing protein attachment to the molded body and the hydrogel.

The reason why containing the macromonomer (A) including the structural unit (a1) enables the molded body and the hydrogel to suppress protein attachment is considered to be as follows.

As the water for carrying out hydration on polymer surfaces, free water that interacts weakly with polymers, intermediate water that interacts moderately with polymers, and non-freezing water that interacts strongly with polymers are known. It is considered that the presence of intermediate water on the polymer surface makes it difficult for proteins to attach to the polymer surface, imparting the ability to suppress protein attachment as a result. For intermediate water to be present on the polymer surface, it is considered that it is effective to include the structural unit (a1) and, among the above, structural units based on methoxyethyl acrylate and methoxyethyl methacrylate are considered to be particularly effective.

The degree of polymerization of the structural unit (a1) is preferably a natural number of 1 to 1,000,000 and, in terms of suppressing protein attachment, a natural number of 2 to 100,000 is more preferable and a natural number of 5 to 50,000 is even more preferable. When the degree of polymerization is 1 or more, the effect of suppressing protein attachment is superior. In addition, when the degree of polymerization is 1,000,000 or less, the moldability is superior.

The terminal structure of the macromonomer (A) is not particularly limited other than having a polymerizable functional group and examples thereof include a vinyl group, (meth)acryloyl group, 2-(hydroxymethyl)acryloyl group, a terminal structure represented by Formula (2) or Formula (3), or the like.

Among the above, it is more preferable to have a terminal structure (a2) represented by Formula (2).

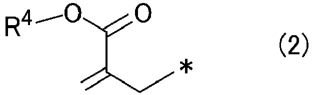

In Formula (2), R⁴ represents a hydrogen atom or an alkyl group, an alkoxy group, an alkoxyalkyl group, an alicyclic group, an aryl group, a heteroaryl group, or a non-aromatic heterocyclic group that may have a substituent and * represents a bond.

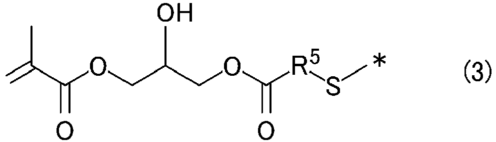

In Formula (3), R⁵ represents an alkylene group having 1 to 18 carbon atoms and * represents a bond.

In Formula (2), examples of the alkyl group for R⁴ include branched or straight-chain alkyl groups having 1 to 22 carbon atoms, specifically, a methyl group, an ethyl group, an n-propyl group, an i-propyl group, an n-butyl group, a t-butyl group, an i-butyl group, a pentyl group (amyl group), an i-pentyl group, a hexyl group, a heptyl group, a 2-ethylhexyl group, an octyl group, an i-octyl group, a nonyl group, an i-nonyl group, a decyl group, an i-decyl group, an undecyl group, a dodecyl group (lauryl group), a tridecyl group, a tetradecyl group, a pentadecyl group, a hexadecyl group, a heptadecyl group, an octadecyl group (stearyl group), an i-octadecyl group, a nonadecyl group, an icosyl group, a docosyl group, and the like.

Examples of the alkoxy group for R⁴ include branched or straight-chain alkoxy groups having 1 to 22 carbon atoms and, specifically, examples thereof include a methoxy group, an ethoxy group, a propoxy group, a butoxy group, and the like.

Examples of the alkoxyalkyl group for R⁴ include branched or straight-chain alkoxy groups having 1 to 22 carbon atoms and, specifically, examples thereof include methoxymethyl groups, methoxyethyl groups, methoxypropyl groups, methoxybutyl groups, ethoxymethyl groups, ethoxyethyl groups, ethoxypropyl groups, ethoxybutyl groups, propoxymethyl groups, propoxyethyl groups, propoxypropyl groups, propoxybutyl groups, butoxymethyl groups, butoxyethyl groups, butoxypropyl groups, butoxybutyl groups, and the like.

Examples of the aryl group for R⁴ include aryl groups having 6 to 18 carbon atoms and, specifically, examples thereof include phenyl and naphthyl groups.

Examples of the heteroaryl group for R⁴ include a heteroaryl group having 4 to 18 carbon atoms and, specifically, examples thereof include a pyridyl group, a carbazolyl group, and the like.

Examples of the non-aromatic heterocyclic group of R⁴ include heterocyclic groups having 4 to 18 carbon atoms and, specifically, examples thereof include oxygen atom-containing heterocyclic groups such as tetrahydrofuryl groups and tetrahydropyranyl groups, nitrogen atom-containing heterocyclic groups such as γ-butyrolactone groups, ε-caprolactone groups, pyrrolidinyl groups, pyrrolidone groups, and morpholino groups, and the like.

Among the above, from the viewpoint of the surface hydrophilicity and transparency of the molded body and hydrogel, R⁴ is preferably an alkyl group that is unsubstituted or that has a substituent, more preferably a methyl group, an ethyl group, an n-propyl group, an i-propyl group, an n-butyl group, a t-butyl group, or an i-butyl group, and particularly preferably an ethyl group.

In Formula (3), examples of the alkylene group of R⁵ include a branched or straight-chain alkylene group having 1 to 18 carbon atoms and, specifically, examples thereof include a methylene group, an ethylene group, an n-propylene group, an i-propylene group, an n-butylene group, a t-butylene group, an i-butylene group, a pentylene group, an i-pentylene group, a hexylene group, a heptylene group, a 2-ethylhexylene group, an octylene group, an i-octylene group, a nonylene group, an i-nonylene group, a decylene group, an i-decylene group, an undecylene group, a dodecylene group, a tridecylene group, a tetradecylene group, a pentadecylene group, a hexadecylene group, a heptadecylene group, an octadecylene group, an i-octadecylene group, and the like.

Among the above, from the viewpoint of the surface hydrophilicity and transparency of the molded body and hydrogel, R⁵ is more preferably a methylene group, an ethylene group, an n-propylene group, an i-propylene group, an n-butylene group, a t-butylene group, or an i-butylene group and even more preferably a methylene group or an ethylene group.

### [Method for Producing Macromonomer (A)]

It is possible to produce the macromonomer (A) by a known method. Examples of methods for producing the macromonomer (A) include a production method using a (meth)acrylic acid-based monomer (a), a compound (b) described below, and a radical polymerization initiator (c) (also referred to below as "production method (A1)"), a method for chemically bonding a polymerizable group (Japanese Unexamined Patent Application, First Publication No. S60-133007, United States Patent No. 5147952, Japanese Unexamined Patent Application, First Publication No. H06-298921; also referred to below as "production method (A2)"), and the like.

### = Production Method (A1) =

The (meth)acrylic acid-based monomer (a) in production method (A1) may be any monomer and is not particularly limited, but the monomer (a'1) exemplified below is preferable. That is, the structural unit (a1) represented by Formula (1) is preferably derived from the monomer (a'1).

Examples of the monomer (a'1) include methoxymethyl acrylate, methoxyethyl acrylate, methoxypropyl acrylate, methoxybutyl acrylate, ethoxymethyl acrylate, ethoxyethyl acrylate, ethoxypropyl acrylate, ethoxybutyl acrylate, propoxymethyl acrylate, propoxyethyl acrylate, propoxypropyl acrylate, propoxybutyl acrylate, butoxymethyl acrylate, butoxyethyl acrylate, butoxypropyl acrylate, butoxybutyl acrylate, methoxymethyl methacrylate, methoxyethyl methacrylate, methoxypropyl methacrylate, methoxybutyl methacrylate, ethoxymethyl methacrylate, ethoxyethyl methacrylate, ethoxypropyl methacrylate, ethoxybutyl methacrylate, propoxymethyl methacrylate, propoxyethyl methacrylate, propoxypropyl methacrylate, propoxybutyl methacrylate, butoxymethyl methacrylate, butoxyethyl methacrylate, butoxypropyl methacrylate, butoxybutyl methacrylate, "Blemmer PME-100" (product name, methoxypolyethylene glycol methacrylate (with 2 chains of ethylene glycol) manufactured by NOF Corp.), "Blemmer PME-200" (product name, methoxypolyethylene glycol methacrylate (with 4 chains of ethylene glycol) manufactured by NOF Corp.), and the like.

Among the above, from the viewpoint of suppressing protein attachment, as the monomer (a'1), methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, methoxypolyethylene glycol methacrylate are preferable, methoxyethyl acrylate, methoxypropyl acrylate, methoxypolyethylene glycol acrylate, and methoxypolyethylene glycol methacrylate are more preferable, and methoxyethyl acrylate and methoxyethyl methacrylate are particularly preferable.

The compound (b) is a compound that plays a role in chain transfer and is preferably a compound represented by Formula (6).

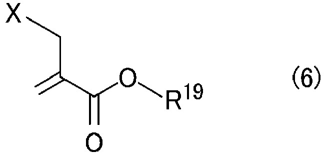

In Formula (6), X represents any atom of chlorine, bromine, or iodine. R¹⁹ represents a hydrogen atom or an alkyl group, an alkoxy group, an alkoxyalkyl group, an alicyclic group, an aryl group, a heteroaryl group, or a non-aromatic heterocyclic group that may have a substituent and is the same as explained for R⁴ in Formula (2).

It is possible to obtain compound (b), for example, by the following method.

A (meth)acrylic acid-based monomer is reacted with formaldehyde or paraformaldehyde in the presence of diazabicycloundecene or 1,4-diazabicyclo[2.2.2]octane, either as is or in an organic solvent, to synthesize a compound where Y in Formula (4) is a hydroxyl group. Next, compound (b) is obtained by a reaction with a halogen-containing compound such as hydrogen halide or phosphorus trihalide to halogenate the hydroxyl group.

The (meth)acrylic acid-based monomer used in the preparation of compound (b) may be any monomer and is not particularly limited.

Examples of the radical polymerization initiator (c) include organic peroxides and azo compounds.

Examples of organic peroxides include 2,4-dichlorobenzoyl peroxide, t-butyl peroxypivalate, o-methylbenzoyl peroxide, bis-3,5,5-trimethylhexanoyl peroxide, octanoyl peroxide, t-butyl peroxy-2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, and di-t-butyl peroxide.

Examples of the azo compound include 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(2-methylpropionate).

As the radical polymerization initiator (c), the examples described above may be used alone, or two or more types may be used in combination.

Among the above, from the viewpoint of ease of availability, benzoyl peroxide, 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(2-methylpropionate) are preferable.

In terms of controlling heat generation during polymerization, the added amount of the radical polymerization initiator (c) is preferably 0.001 to 1 mol% with respect to 100 parts by mass of the (meth)acrylic acid-based monomer and more preferably 0.01 to 0.5 mol%.

From the viewpoint of the solubility and reaction stability of each component, the polymerization temperature is preferably 0°C or higher and equal to or less than the temperature obtained by subtracting 15°C from the 10-hour half-life temperature of the radical polymerization initiator (c).

The polymerization time is not particularly limited, but is, for example, 3 to 12 hours and preferably 5 to 8 hours.

In addition, in solution polymerization, the organic solvent, the (meth)acrylic acid-based monomer (a), the compound (b), and the radical polymerization initiator (c) may be charged and polymerized in a batch, or the monomers may be added dropwise to proceed with the polymerization.

### = Production Method (A2) =

Examples of methods for chemically bonding the polymerizable groups include a production method in which, after polymerization using the (meth)acrylic acid-based monomer (a), a chain transfer agent (d), and the radical polymerization initiator (c), a reaction is carried out between a site derived from the chain transfer agent (d) introduced at the α-terminal and a reactive monomer (e).

As the chain transfer agent (d), for example, a compound represented by Formula (7) is preferable.

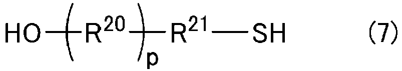

In Formula (7), R²⁰ represents a carbonyl group and R²¹ represents an alkylene group having 1 to 18 carbon atoms, which is the same as explained for R⁵ in Formula (3). p is 0 or 1.

Examples of the chain transfer agent (d) in which R²⁰ in Formula (7) is a carbonyl group include 3-mercaptopropionic acid, 6-mercaptohexanoic acid, 11-mercaptoundecanoic acid, 16-mercaptohexadecanoic acid, and the like. Among the above, 3-mercaptopropionic acid is preferable in terms of ease of availability.

When R²⁰ in Formula (7) is a carbonyl group and p is 1, the chain transfer agent (d) has a carboxy group. Therefore, the reactive monomer (e) combined with the chain transfer agent (d) at this time preferably has a reactive group such as a glycidyl group that is reactive with a carboxy group. Examples of the monomer (e) having a glycidyl group include glycidyl (meth)acrylate, 3,4-epoxycyclohexylmethyl methacrylate, 4-hydroxybutyl acrylate glycidyl ether, and the like. Among the above, glycidyl methacrylate is preferable in terms of ease of availability.

In addition, examples of the chain transfer agent (d) in which p=0 in Formula (7) include mercaptoethanol, 3-mercapto-1-propanol, 1-mercapto-2-propanol, 2-mercapto-1-propanol, 3-mercapto-2-butanol, 4-mercapto-1-butanol, 6-mercapto-1-hexanol, 3-mercaptohexanol, 3-mercapto-3-methyl-1-butanol, 4-hydroxybenzenethiol, and the like. Among the above, mercaptoethanol is preferable in terms of ease of availability.

When p=0 in Formula (7), the chain transfer agent (d) has a hydroxyl group. Therefore, the reactive monomer (e) combined with the chain transfer agent (d) at this time preferably has a reactive group such as an isocyanate group that is reactive with a hydroxyl group. Examples of the monomer (e) having an isocyanate group include 2-isocyanatoethyl (meth)acrylate and the like.

As the chain transfer agent (d), the examples described above may be used alone, or two or more types may be used in combination.

### 2. Silicone-based (Meth)acrylate (B)

The silicone-based (meth)acrylate (B) of the present invention is a component that contributes to the oxygen permeability, transparency, mechanical strength, hydrophilicity, and the like of the molded bodies and hydrogel.

The silicone-based (meth)acrylate (B) may be any of a monomer, a macromonomer, or a prepolymer.

The silicone-based (meth)acrylate (B) preferably has a siloxanyl group in the molecule.

Examples of the silicone-based (meth)acrylate (B) include trimethylsiloxydimethylsilylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)silylpropyl (meth)acrylate, tris[methylbis(trimethylsiloxy)siloxy]silylpropyl (meth)acrylate, methylbis(trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)silylpropylglyceryl (meth)acrylate, trimethylsilylethyltetramethyldisiloxypropyl glyceryl (meth)acrylate, trimethylsiloxydimethylsilylpropylglyceryl (meth)acrylate, methylbis(trimethylsiloxy)silylethyltetramethyldisiloxymethyl (meth)acrylate, tetramethyltriisopropylcyclotetrasiloxanylpropyl (meth)acrylate, tetramethyltriisopropylcyclotetrasiloxybis(trimethylsiloxy)silylpropyl (meth)acrylate.

Further examples of the silicone-based (meth)acrylate (B) include a compound (B 1) and a compound (B2) described below.

### [Compound (B1)]

The compound (B 1) is a silicone (meth)acrylate represented by Formula (4).

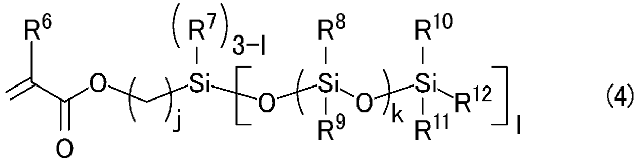

In Formula (4), R⁶ represents a hydrogen atom or a methyl group. R⁷ to R¹² each independently represent an alkyl group, an alkoxy group, or an alkoxyalkyl group that may have a substituent. j is a natural number of 1 to 10, k is a natural number of 1 to 30, and l is a natural number of 1 to 3. When l is 1, a plurality of R⁷ may be the same or different from each other and, when l is 2 or more, a plurality of R⁸ to R¹² may be the same or different from each other. In addition, when k is 2 or more, a plurality of R⁸ and R⁹ may be the same or different from each other.

From the viewpoint of ease of availability, R⁶ is preferably a methyl group.

The alkyl group, alkoxy group, and alkoxyalkyl group in R⁷ to R¹² are the same as explained for R⁴ in Formula (2).

In addition, R⁷ to R¹² may be a halogenated alkyl group and examples of the halogen include fluorine, chlorine, bromine, iodine, and the like.

Among the above, R⁷ is preferably an alkyl group that is unsubstituted or that has a substituent, more preferably a methyl group, an ethyl group, an n-propyl group, an i-propyl group, an n-butyl group, a t-butyl group, or an i-butyl group, and particularly preferably a methyl group.

In addition, R⁸ to R¹² are preferably an alkyl group or a halogenated alkyl group and more preferably a methyl group, an ethyl group, an n-propyl group, an i-propyl group, an n-butyl group, a t-butyl group, an i-butyl group, a fluoromethyl group, a difluoromethyl group, a trifluoromethyl group, a 1-fluoroethyl group, a 2-fluoroethyl group, a 1, 1-difluoroethyl group, a 1,2-difluoroethyl group, a 2,2-difluoroethyl group, a 2,2,2-trifluoroethyl group, a 3,3,3-trifluoropropyl group, and a 1-trifluoromethylethyl group.

From the viewpoint of oxygen permeability of the molded body and hydrogel, at least one of R⁸ to R¹² is preferably a halogenated alkyl group and more preferably a fluorinated alkyl group.

j is a natural number of 1 to 10, preferably 1 to 5.

k is a natural number of 1 to 30, preferably 1 to 20. The compound (B 1) may be a mixture of a plurality of compounds having different k.

l is a natural number of 1 to 3, preferably 1 or 2.

Among the above, at least one of the following compounds is preferable as the compound (B 1).
- A compound in which R⁶ to R¹¹ in Formula (4) are a methyl group, R¹² is an n-butyl group, j is 3, and l is 1 ("Silaplane (registered trademark) FM-0711", "Silaplane (registered trademark) FM-0721", and "Silaplane (registered trademark) FM-0725" manufactured by JNC Corp., "MCR-M07" and "MCR-M11" manufactured by Gelest Inc.)
- A compound in which R⁶, R⁷, R⁹, and R¹¹ in Formula (4) are a methyl group, R⁸ and R¹⁰ are a 3,3,3-trifluoropropyl group, R¹² is an n-butyl group, j is 3, and l is 1 ("MFR-M15" manufactured by Gelest Inc.)
- A compound in which R⁶ to R¹¹ in Formula (4) are a methyl group, R¹² is an n-butyl group, j is 3, and l is 2 ("MCS-M11" manufactured by Gelest Inc.)
- A compound in which R⁶ to R¹¹ in Formula (4) are a methyl group, R¹² is a methoxypropyl group, j is 3, and l is 2 ("MCS-MX11" manufactured by Gelest Inc.)
- A compound in which R⁶, R⁷, R⁹ and R¹¹ in Formula (4) are a methyl group, R⁸ and R¹⁰ are a 3,3,3-trifluoropropyl group, R¹² is an n-butyl group, j is 3, and l is 2 ("MFS-M15" manufactured by Gelest Inc.)

### [Compound (B2)]

The compound (B2) is a silicone-based (meth)acrylate represented by Formula (5).

In Formula (5), R¹³ represents a hydrogen atom or a methyl group. R¹⁴ represents a single bond or an alkylene group, an alkylene oxide group, a polyalkylene oxide group, or an alkylene-oxy-alkylene group that may have a substituent. R¹⁵ to R¹⁸ each independently represent an alkyl group, an alkoxy group, or an alkoxyalkyl group that may have a substituent. m is a natural number of 1 to 10 and n is a natural number of 1 to 3. When n is 1, a plurality of R¹⁵s may be the same or different from each other. When n is 2 or more, a plurality of R¹⁶ to R¹⁸ may be the same or different from each other.

From the viewpoint of ease of availability, R¹³ is preferably a methyl group.

The alkylene group, alkylene oxide group, polyalkylene oxide group, or alkylene-oxy-alkylene group in R¹⁴ is the same as the alkyl group, alkoxy group, and alkoxyalkyl group explained for R⁴ in Formula (2) as divalent substituents.

From the viewpoint of the surface hydrophilicity and transparency of the molded body and hydrogel, R¹⁴ is preferably a single bond, an alkylene oxide group that is unsubstituted or that has a substituent, or an alkylene-oxy-alkylene group and more preferably a single bond or an alkylene oxide group that is unsubstituted or that has a substituent.

The alkyl group, alkoxy group, and alkoxyalkyl group in R¹⁵ to R¹⁸ are the same as explained for R⁴ in Formula (2).

In addition, R¹⁵ to R¹⁸ may be a halogenated alkyl group and examples of the halogen include fluorine, chlorine, bromine, iodine, and the like.

Among the above, R¹⁵ to R¹⁸ are preferably unsubstituted or substituted alkyl groups, more preferably methyl groups, ethyl groups, n-propyl groups, i-propyl groups, n-butyl groups, t-butyl groups, or i-butyl groups, and particularly preferably methyl groups.

m is a natural number of 1 to 10 and preferably 1 to 5.

In addition, n is a natural number of 1 to 3 and preferably 2 or 3 from the viewpoint of the surface hydrophilicity and transparency of the molded body and hydrogel.

Among the above, at least one of the following compounds is preferable as the compound (B2).
- A compound in which R¹³ in Formula (5) is a methyl group, R¹⁴ is a single bond, R¹⁶ to R¹⁸ are a methyl group, m is 3, and n is 3 (TRIS, "SIM6487.6" manufactured by Gelest Inc.)
- A compound in which R¹³ in Formula (5) is a methyl group, R¹⁴ is CH₂CH(OH)CH₂O, R¹⁵ to R¹⁸ are a methyl group, m is 3, and n is 2 (SIMMA, "SIM6481.15" manufactured by Gelest Inc., "BX-SiGMMA" manufactured by Bimax, Inc.)

As the silicone-based (meth)acrylate (B), the compounds (B1) and (B2) exemplified above may be used alone or two or more may be used in combination. From the viewpoint of the surface hydrophilicity, transparency, and flexibility of the molded body and hydrogel, it is preferable to use compounds (B 1) and (B2) in combination.

The content of silicone-based (meth)acrylate (B) in the present composition is preferably 5 to 50% by mass and more preferably 10 to 40% by mass. In the above ranges, the surface hydrophilicity, transparency, and oxygen permeability of the molded body and hydrogel are good.

### 3. Hydrophilic Monomer (C)

The hydrophilic monomer (C) used in the present invention is a component that contributes to the hydrophilicity of silicone hydrogel.

The hydrophilic monomer (C) preferably has one or more types selected from a hydroxyl group, an amino group, a carboxyl group, an ionic group, an amide structure, and an alkylene oxide structure in the molecule.

In addition, the hydrophilic monomer (C) may be any of a monomer, a macromonomer, and a prepolymer.

Examples of the hydrophilic monomer (C) include monomers having hydroxyl groups such as 2-hydroxyethyl (meth)acrylate, 2,3-dihydroxypropyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate; monomers having amino groups such as N,N-dimethylaminoethyl (meth)acrylate; monomers having carboxyl groups such as (meth)acryloxyethylsuccinic acid; monomers having ionic groups such as (3-(meth)acrylamidopropyl)trimethylammonium chloride, (meth)acryloxyethyldimethylbenzylammonium chloride, 3-((meth)acrylamido)propyl dimethylbenzylammonium chloride, (meth)acryloylcholine chloride, 2-(meth)acryloyloxyethylphosphorylcholine; monomers having an amide structure such as N-hydroxymethyl(meth)acrylamide, N-(2-hydroxyethyl)(meth)acrylamide, (meth)acrylamide, N-vinyl-2-pyrrolidone, N-vinylacetamide, N,N-dimethyl(meth)acrylamide, N,N-diethylacrylamide, N-isopropyl(meth)acrylamide, morpholyl(meth)acrylamide; and monomers having an alkylene oxide structure such as 2-methoxyethyl (meth)acrylate and polyethylene glycol (meth)acrylate.

The hydrophilic monomer (C) may be used alone or two or more may be used in combination.

Among the above, it is preferable to include 2-hydroxyethyl (meth)acrylate for the reasons of hydrophilicity and ease of availability and it is preferable to include N-vinyl-2-pyrrolidone and/or N,N-dimethylacrylamide for the reasons of imparting flexibility and mechanical strength.

The content of the hydrophilic monomer (C) in the present composition is preferably 20 to 90% by mass and more preferably 30 to 85% by mass. In the above range, the surface hydrophilicity and transparency of the molded body and hydrogel are good.

### 4. Cross-linking Agent (D)

The present composition may also include a cross-linking agent (D) in order to increase the solvent resistance of the hydrogel. The cross-linking agent (D) acts as a cross-linking agent during the polymerization reaction of the components (A) to (C) described above.

The cross-linking agent (D) preferably has two or more polymerizable unsaturated groups.

Examples thereof include ethylene glycol dimethacrylate, diethylene glycol dimethacrylate, triethylene glycol dimethacrylate, tetraethylene glycol dimethacrylate, allyl methacrylate, ethylene glycol divinyl ether, diethylene glycol divinyl ether, triethylene glycol divinyl ether, triethylene glycol diallyl ether, tetraethylene glycol diallyl ether, methylenebisacrylamide, trimethylolpropane trimethacrylate, (2-allyloxy)ethyl methacrylate, 2-(2-vinyloxyethoxy)ethyl acrylate, 2-(2-vinyloxyethoxy)ethyl methacrylate, and the like.

The content of the cross-linking agent (D) in the present composition is preferably 0.1 to 10% by mass and more preferably 0.5 to 5% by mass. In the above ranges, the moldability and solvent resistance of the molded body and hydrogel are good.

### 5. Polymerization Initiator (E)

The present composition preferably include a polymerization initiator (E) in order to effectively carry out the polymerization reaction. Examples of the polymerization initiator (E) include photopolymerization initiators and thermal polymerization initiators.

Examples of photopolymerization initiators include benzyl, benzophenone and derivatives thereof, thioxanthones, benzyl dimethyl ketals, α-hydroxyalkylphenones, α-hydroxyacetophenones, hydroxyketones, aminoalkylphenones, acylphosphine oxides, oxime ester compounds, and the like. Among the above, α-hydroxyalkylphenones are less likely to cause yellowing during curing and are able to obtain transparent cured products, which is preferable.

Examples of the thermal polymerization initiator include the organic peroxides and azo compounds exemplified as the radical polymerization initiator (c) described above.

The added amount of the polymerization initiator (E) is preferably 0.1 to 3 parts by mass when the total of the monomer components in the composition is 100 parts by mass, more preferably 0.1 to 2 parts by mass, and particularly preferably 0.2 to 1 part by mass. When the amount is 0.1 to 3 parts by mass, the polymerization rate is high and decomposition products and the like derived from the polymerization initiator (E) are less likely to remain.

### 6. Other Components

In addition to the components (A) to (E) described above, the present composition may contain additives such as a polymerizable ultraviolet absorber and a polymerizable dye (coloring agent) in a range in which the purpose of the present invention is not impaired. Polymerizable ultraviolet absorbers and polymerizable dyes are also included in the "monomer component" of the present invention.

The content ratio of each of the polymerizable ultraviolet absorber and the polymerizable dye is preferably 5% by mass or less and more preferably 0.02 to 3% by mass.

### <Molded Body and Silicone Hydrogel>

The molded body and silicone hydrogel formed of the present composition have excellent surface hydrophilicity and transparency and are also excellent in biocompatibility and low protein attachment.

Therefore, the silicone hydrogel formed of the present composition is particularly useful for ophthalmic devices such as contact lenses, intraocular lenses, and artificial corneas.

When being used as an ophthalmic device, the film thickness of the silicone hydrogel is preferably 0.01 to 4 mm, more preferably 0.01 to 3 mm, even more preferably 0.02 to 2 mm, and yet more preferably 0.03 to 1 mm.

The water droplet contact angle of silicone hydrogel is preferably 80 degrees or less, more preferably 70 degrees or less, and even more preferably 60 degrees or less. A lower water droplet contact angle is more preferable and the lower limit may be 0 degrees or more.

The total light transmittance of the silicone hydrogel is preferably 90% or more, more preferably 92% or more, and even more preferably 93% or more. A higher total light transmittance is more preferable and the upper limit may be 100% or less.

### <Curable Composition, Molded Body, and Method for Producing Silicone Hydrogel>

A description will be given of the curable composition, the molded body, and the method for producing a silicone hydrogel of the present invention. The following production method is merely an example and the invention is not limited at all by these examples.

### (Curable Composition)

It is possible to produce the present composition, for example, by introducing each component in any order or in one batch into a stirring (mixing) device and stirring (mixing) at a temperature of 10°C to 50°C until uniform.

### (Molded Body)

It is possible to obtain a molded body (cured product) by filling a mold with the present composition and performing a polymerization reaction. As the mold, a mold having a hydrophobic surface formed of polypropylene or the like is preferable.

It is possible to perform the polymerization reaction by irradiation with active energy rays or by heating the composition.

When carrying out a polymerization reaction using active energy rays, examples of the active energy rays include ultraviolet rays, electron beams, and the like. Examples of ultraviolet ray sources include high-pressure mercury lamps. The amount of ultraviolet energy is preferably approximately 0.1 to 10 J/cm².

When carrying out a polymerization reaction by heating, the temperature and heating time are not particularly limited, but are preferably set to a temperature of 75 to 140°C for 1 to 12 hours or less.

The polymerization reaction may be performed in the air, but may also be performed in an inert gas atmosphere such as nitrogen or argon for the purpose of improving the polymerization rate of the monomer. When carrying out the polymerization in an inert gas atmosphere, the pressure in the polymerization system is preferably 1 kgf/cm² or less.

After the polymerization reaction, it is possible to take out the molded body (cured product) in a dry state by deforming the mold. In addition, the molded body (cured product) may be immersed together with a mold in a solvent (for example, water, methanol, ethanol, 1-propanol, 2-propanol, a mixture thereof, or the like) to swell only the molded body (cured product) and carry out detachment from the mold naturally. It is preferable to take out the molded body (cured product) in a dry state without using a solvent.

After the above polymerization reaction, the molded body (cured product) may become a mixture of unreacted monomer components (unreacted products), residues of each component, by-products, and the like and thus may be washed with a solvent. Examples of the solvent used for washing include water, methanol, ethanol, 1-propanol, 2-propanol, mixtures thereof, and the like.

### (Silicone Hydrogel)

It is possible to obtain a silicone hydrogel by hydrating a molded body (cured product) formed of the present composition into hydrogel form.

Hydration may be carried out by immersing the molded body (cured product) in water or physiological saline for 10 minutes to 5 hours at a temperature of 10°C to 40°C. Examples

Next, a more detailed description will be given of the present invention with reference to Examples. However, the present invention is not limited to the Examples described below.

### <Preparation of Monomer Mixture (1)>

6 parts by mass of a silicone macromonomer (MFR-M15 manufactured by Gelest Inc.) as a silicone-based (meth)acrylate (B-1), 9 parts by mass of siloxanyl acrylate (3-[tris(trimethylsiloxy)silyl]propyl methacrylate) as a silicone-based (meth)acrylate (B-2), 82 parts by mass of dimethylacrylamide as a hydrophilic monomer (C-1), 2 parts by mass of ethylene glycol dimethacrylate as a cross-linking agent (D-1), 1 part by mass of 2-hydroxy-2-methylpropiophenone as a polymerization initiator (E-1) were stirred at room temperature to obtain a monomer mixture (1).

### <Preparation of Monomer Mixture (2)>

6 parts by mass of the silicone-based (meth)acrylate (B-1), 9 parts by mass of siloxanyl acrylate ("BX-SiGMMA" manufactured by Bimax, Inc., (methyldi(trimethylsiloxy)silylpropylglyceryl methacrylate)) as a silicone-based (meth)acrylate (B-3), 82 parts by mass of the hydrophilic monomer (C-1), 2 parts by mass of the cross-linking agent (D-1), and 1 part by mass of the polymerization initiator (E-1) were stirred at room temperature to obtain a monomer mixture (2).

### <Preparation of Macromonomer (A-1)>

2-methoxyethyl acrylate as the (meth)acrylic acid-based monomer (a-1), ethyl 2-bromomethyl acrylate as the compound (b-1), and 2,2'-azobis(isobutyronitrile) as the radical polymerization initiator (c-1) were dissolved in toluene at a molar ratio of 100:4.0:0.3 (solid content concentration: 40%), heated to 70°C, and polymerized for 6 hours. Thereafter, reprecipitation was performed using hexane to obtain a macromonomer (A-1) having a poly(methoxyethyl acrylate) structural unit and a radically polymerizable functional group. The number average molecular weight (Mn ^{GPC}) of the obtained compound (A-1) according to GPC is 2,700, the number average molecular weight (Mn ^{NMR}) according to NMR is 2,700, and the remaining monomer was less than 1 mol%.

### <Compounds (A'-101) to (A'-103)>

As a compound (A'-101), methoxypolyethylene glycol-methacrylate ("Blemmer (registered trademark) PME-100" manufactured by NOF Corp.) was used.

As a compound (A'-102), methoxypolyethylene glycol-methacrylate ("Blemmer (registered trademark) PME-400" manufactured by NOF Corp.) was used.

As a compound (A'-103), methoxypolyethylene glycol-methacrylate ("Blemmer (registered trademark) PME-1000" manufactured by NOF Corp.) was used.

### <Preparation of Curable Composition>

To the monomer mixture (1) or (2) above, the macromonomers (A-1) or (A'-101) to (A'-103) were added in the blends shown in Table 1 and stirred at room temperature to obtain a curable composition.

### <Preparation of Molded Body (Cured Product) and Silicone Hydrogel>

The above composition was poured into a polypropylene mold, covered with a transparent mold release PET film lid, and irradiated with UV light multiple times using a UV irradiation machine (manufactured by Ushio Inc., UVC-501/10S4A), such that the cumulative irradiation amount was 2.7 J/cm², to obtain a molded body (cured product).

In addition, the obtained molded body (cured product) was immersed in a sufficient amount of pure water overnight or longer to obtain a silicone hydrogel.

### <Measurement of Number Average Molecular Weight (Mn)>

The number average molecular weight (Mn) was determined by two methods using gel permeation chromatography (GPC) and nuclear magnetic resonance (NMR). The measurement conditions are shown below.

### [Measurement of Number Average Molecular Weight (Mn ^{GPC}) using GPC]

Apparatus: HLC-8220 (manufactured by Tosoh Corp.)
Column: TSK GUARD COLUMN SUPER H-H (4.6 × 35 mm, manufactured by Tosoh Corp.) and two TSK-GEL SUPER HM-H (6.0 × 150 mm, manufactured by Tosoh Corp.) are connected in series
Eluent: Tetrahydrofuran
Measurement temperature: 40°C
Flow rate: 0.6 mL/min
Mn ^{GPC} was calculated using a calibration curve created using polymethyl methacrylate (Mp (peak molecular weight) = 4 of 141,500, 55,600, 11,100, and 1,590) manufactured by Polymer Laboratories.

### [Measurement of Number Average Molecular Weight (Mn ^{NMR}) using NMR]

Apparatus: BBF0400 (manufactured by Bruker)
Solvent: CDCl₃
Measurement method: ¹H-NMR
Mn ^{NMR} uses the integrated value of the peak derived from the terminal double bond group of the produced polymer and the integrated value of the peak derived from the ester part of the monomer constituting the produced polymer and is calculated from the molar ratio of the terminal double bond group and the number of repeating units of the monomer, assuming that the introduction rate of the terminal double bond group is 100%.

### <Measurement of Film Thickness>

The film thickness of this hydrogel was measured at three randomly locations in the surface using a 1/1000 mm dial gauge and the average thereof was taken as the thickness.

### <Measurement of Water Contact Angle>

Using a contact angle meter (manufactured by Kyowa Interface Science Co., Ltd., "Drop Master 500"), 2 µg of pure water was dropped onto hydrogel for which surface moisture had been lightly wiped off and the contact angle was measured after 10 seconds. The measurement was performed at room temperature and, as the measurement surface of the hydrogel, the surface that was in contact with the polypropylene mold during UV curing was measured.

### <Total Light Transmittance Measurement>

The total light transmittance of the hydrogel was measured using a haze meter NDH-7000II (manufactured by Nippon Denshoku Kogyo Co., Ltd.) according to JIS K7136 (2000).

The results are shown in Table 1.

**[Table 1]**

| | | Example 1 | Example 2 | Example 3 | Example 4 | Comparative Example 1 | Comparative Example 2 | Comparative Example 3 | Comparative Example 4 | Reference Example 1 |
|---|---|---|---|---|---|---|---|---|---|---|
| Monomer mixture (1) | [% by mass] | 95 | 90 | 80 | - | 100 | - | 90 | 90 | 90 |
| Monomer mixture (2) | [% by mass] | - | - | - | 90 | - | 100 | - | - | - |
| A-1 (Mn = 2700) | [% by mass] | 5 | 10 | 20 | 10 | - | - | - | - | - |
| A'-101 (PME-100) | [% by mass] | - | - | - | - | - | - | 10 | - | - |
| A'-102 (PME-400) | [% by mass] | - | - | - | - | - | - | - | 10 | - |
| A'-103 (PME-1000) | [% by mass] | - | - | - | - | - | - | - | - | 10 |
| Film thickness | [mm] | 0.78 | 0.80 | 0.78 | 0.77 | 0.74 | 0.81 | 0.80 | 0.80 | 0.81 |
| Water droplet contact angle | [Degrees] | 59.6 | 58.3 | 56.2 | 58.9 | 95.8 | 94.9 | 99.3 | 94.3 | 87.5 |
| Total light transmittance | [%] | 94.6 | 94.6 | 93.7 | 93.6 | 94.8 | 94.5 | 94.9 | 94.7 | 95.0 |

From Examples 1 to 4, it was confirmed that the surface hydrophilicity of the hydrogel was increased by using the macromonomer (A) having the structural unit (a1). The hydrogels of Examples 1 to 4 had high total light transmittance and also good transparency.

On the other hand, in Comparative Examples 3 and 4, since compounds (A'-101) and (A'-102), which were not macromonomers having the structural unit (a1), were used, the polymerization reaction easily occurred and incorporation into the cross-linked body took place without a reaction-induced phase separation occurring, thus, the compounds (A'-101) and (A'-102) were not able to be segregated on the surface and the surface hydrophilicity was not increased.

In addition, in Reference Example 1, the compound (A'-103) that did not have the structural unit (a1) was used, thus, the effect of increasing the surface hydrophilicity was small.

## Claims

1. A curable composition comprising:
a macromonomer (A) having a structural unit (a1) represented by Formula (1);
a silicone-based (meth)acrylate (B); and
a hydrophilic monomer (C), 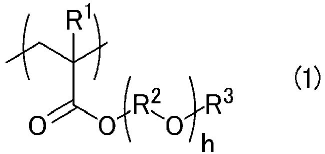
(in Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20).

2. The curable composition according to Claim 1,
wherein a content of the macromonomer (A) is 1 to 50% by mass.

3. The curable composition according to Claim 1,
wherein a ratio of the structural unit (a1) among all structural units of the macromonomer (A) is 40% by mass or more.

4. The curable composition according to Claim 1,
wherein a ratio of the structural unit (a1) among all structural units of the macromonomer (A) is 70% by mass or more.

5. The curable composition according to Claim 1,
wherein the macromonomer (A) has a number average molecular weight of 500 to 100,000.

6. The curable composition according to Claim 1,
wherein the macromonomer (A) has a number average molecular weight of 1,000 to 5,000.

7. The curable composition according to Claim 1,
wherein the structural unit (a1) is derived from a monomer (a'1), and
the monomer (a'1) is at least one selected from the group consisting of methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, and methoxypolyethylene glycol methacrylate.

8. The curable composition according to Claim 1,
wherein the macromonomer (A) has a terminal structure (a2) represented by Formula (2), 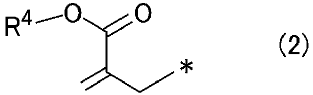
(in Formula (2), R⁴ represents a hydrogen atom or an alkyl group, an alkoxy group, an alkoxyalkyl group, an alicyclic group, an aryl group, a heteroaryl group, or a non-aromatic heterocyclic group that may have a substituent, and * represents a bond).

9. The curable composition according to Claim 1, wherein the curable composition contains at least one of a compound (B1) represented by Formula (4) and a compound (B2) represented by Formula (5) as the silicone-based (meth)acrylate (B), 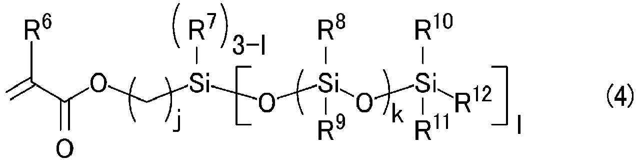
(in Formula (4), R⁶ represents a hydrogen atom or a methyl group, R⁷ to R¹² each independently represent an alkyl group, an alkoxy group, or an alkoxyalkyl group that may have a substituent, j is a natural number of 1 to 10, k is a natural number of 1 to 30, l is a natural number of 1 to 3, and, when l is 1, a plurality of R⁷ may be the same or different from each other, when l is 2 or more, a plurality of R⁸ to R¹² may be the same or different from each other, and, when k is 2 or more, a plurality of R⁸ and R⁹ may be the same or different from each other) 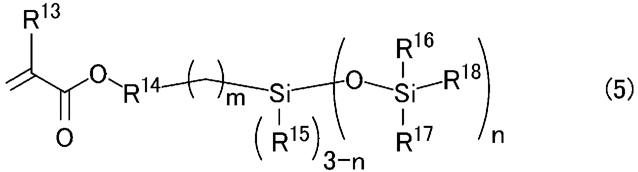
(in Formula (5), R¹³ represents a hydrogen atom or a methyl group, R¹⁴ represents a single bond or an alkylene group, an alkylene oxide group, a polyalkylene oxide group, or an alkylene-oxy-alkylene group that may have a substituent, R¹⁵ to R¹⁸ each independently represent an alkyl group, an alkoxy group, or an alkoxyalkyl group that may have a substituent, m is a natural number of 1 to 10, n is a natural number of 1 to 3, and, when n is 1, a plurality of R¹⁵ may be the same or different from each other, and, when n is 2 or more, a plurality of R¹⁶ to R¹⁸ may be the same or different from each other).

10. A molded body comprising:
the curable composition according to any one of Claims 1 to 9.

11. A silicone hydrogel comprising:
the curable composition according to any one of Claims 1 to 9.

12. A method for producing a silicone hydrogel, the method comprising:
a step of preparing the curable composition according to any one of Claims 1 to 9;
a step of filling the curable composition into a mold and causing a polymerization reaction to obtain a molded body; and
a step of hydrating the molded body to obtain a hydrogel.

13. The method for producing a silicone hydrogel according to Claim 12,
wherein the mold has a hydrophobic surface.

14. A macromonomer comprising:
a structural unit (a1) represented by Formula (1) and a terminal structure (a2) represented by Formula (2), 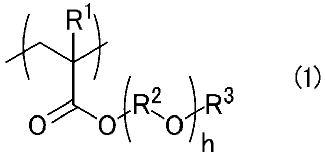
(in Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20), 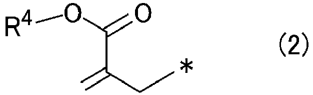
(in Formula (2), R⁴ represents a hydrogen atom or an alkyl group, an alkoxy group, an alkoxyalkyl group, an alicyclic group, an aryl group, a heteroaryl group, or a non-aromatic heterocyclic group that may have a substituent, and * represents a bond).
